# EUROPEAN PATENT SPECIFICATION

(11) **EP 2 517 522 B1**
(45) Date of publication and mention of the grant of the patent: **25.12.2013**
(21) Application number: 10793074.5
(22) Date of filing: 19.11.2010
(51) Int. Cl.: H04W 74/08

(54) **METHOD AND APPARATUS OF CONFIRMING RECEPTION OF CLEAR-TO-SEND FRAME FOR VIRTUAL CARRIER SENSING**
VERFAHREN UND VORRICHTUNG ZUR BESTÄTIGUNG DES EMPFANGS VON SENDEBEREITEN FRAMES FÜR VIRTUELLE TRÄGERABTASTUNG
PROCÉDÉ ET APPAREIL DE CONFIRMATION DE LA RÉCEPTION D'UNE TRAME PRÊTE À ÉMETTRE POUR DÉTECTION DE PORTEUR VIRTUEL

(30) Priority: 20.11.2009 US 263248 P; 18.11.2010 US 949516
(43) Date of publication of application: 31.10.2012
(73) Proprietor: Qualcomm Incorporated, San Diego, CA 92121 (US)
(72) Inventor: JAIN, Avinash, San Diego, California 92121 (US); ABRAHAM, Santosh Paul, San Diego, California 92121 (US); SAMPATH, Hemanth, San Diego, California 92121 (US); TAGHAVI NASRABADI, Mohammad Hossein, San Diego, California 92121 (US)
(74) Representative: Emde, Eric
(86) International application number: PCT/US2010/057517
(87) International publication number: WO 2011/063295

(56) References cited:
- WO-A1-2007/146685
- US-A1- 2004 156 339
- TIANBO KUANG, CAREY WILLIAMSON: "A Bidirectional Multi-channel MAC Protocol for Improving TCP Performance on Multihop Wireless Ad Hoc Networks", MSWIM' 04, 6 October 2004 (2004-10-06), pages 301-310, XP040009286, Venezia, Italy

## Description

### BACKGROUND

### Claim of Priority under 35 U.S.C. §119

The present Application for Patent claims benefit of U.S. Provisional Patent Application Serial No. 61/263,248, entitled, "Method of confirming the receipt of CTS frame to solve the problem of virtual carrier sensing", filed November 20, 2009.

### Field

Certain aspects of the present disclosure generally relate to wireless communications and, more particularly, to a method and apparatus for confirming reception of Clear-to-send (CTS) message in the case of virtual carrier sensing.

### Background

Request-to-send (RTS) and Clear-to-send (CTS) represents a channel reservation protocol defined by the Institute of Electrical and Electronics Engineers (IEEE) 802.11 wireless communications standard to be utilized by the IEEE 802.11 distributed Media Access Control (MAC) protocol. The RTS-CTS protocol can implement virtual carrier sensing, which may be particularly important for channel reservation if one or more hidden wireless nodes are present in a wireless network.

The problem of hidden node can occur when a first station (STA) (e.g., STA A) of a wireless network is scheduled to transmit data to a second station (e.g., STA B). However, there can be a third station (e.g., STA C) in the neighborhood of STA B, but outside the range of STA A. The transmission of STA C may create interference at the STA B, but not at the STA A. Inability of the STA A to know on its own the interference at the STA B has two aspects. In one aspect, the STA A may not know whether the STA C is transmitting or not. If the STA C is transmitting, then any transmission from the STA A to the STA B may not be decoded. In another aspect, the STA A may not be able to reserve a medium for transmission by broadcasting a request message (e.g., RTS message) because the STA C may not be able to decode the request being outside the range of STA A.
Attention is drawn to a document by TIANBO KUANG, CAREY WILLIAMSON: "A Bidirectional Multi-channel MAC Protocol for Improvinag TCP Performance on Multihop Wireless Ad Hoc Networks", MSWIM' 04, 6 October 2004 (2004-10-06), pages 301-310, XP040009286. The document proposes a bidirectional multi channel MAC protocol designed to improve TCP performance over a multihop wireless network. The protocol uses multiple transmission channels at the physical layer to reduce TCP DATA-DATA contention, and bidirectional RTS/CTS channel reservations to reduce TCP DATA-ACK collisions.

### SUMMARY

In accordance with the present invention, a method for wireless communication, as set forth in claims 1 and 9, and an apparatus for wireless communications, as set forth in claims 8 and 14, are provided. Embodiments of the invention are defined in the dependent claims.

Certain aspects provide a method for wireless communications. The method generally includes transmitting a request to use a medium, receiving a first frame transmitted in response to the request, wherein the first frame comprises medium reservation information, and transmitting a second frame comprising the same medium reservation information as the first frame.

Certain aspects provide an apparatus for wireless communications. The apparatus generally includes a transmitter configured to transmit a request to use a medium, and a receiver configured to receive a first frame transmitted in response to the request, wherein the first frame comprises medium reservation information, and wherein the transmitter is also configured to transmit a second frame comprising the same medium reservation information as the first frame.

Certain aspects provide an apparatus for wireless communications. The apparatus generally includes means for transmitting a request to use a medium, and means for receiving a first frame transmitted in response to the request, wherein the first frame comprises medium reservation information, and wherein the means for transmitting is further configured to transmit a second frame comprising the same medium reservation information as the first frame.

Certain aspects provide a computer-program product for wireless communications. The computer-program product includes a computer-readable medium comprising instructions executable to transmit a request to use a medium, receive a first frame transmitted in response to the request, wherein the first frame comprises medium reservation information, and transmit a second frame comprising the same medium reservation information as the first frame.

Certain aspects provide a wireless node. The wireless node generally includes at least one antenna, a transmitter configured to transmit via the at least one antenna a request to use a medium, and a receiver configured to receive via the at least one antenna a first frame transmitted in response to the request, wherein the first frame comprises medium reservation information, and wherein the transmitter is also configured to transmit via the at least one antenna a second frame comprising the same medium reservation information as the first frame.

Certain aspects provide a method for wireless communications. The method generally includes detecting a request to use a medium transmitted by an apparatus, detecting a first frame transmitted by the apparatus confirming receipt of a second frame transmitted by another apparatus in response to the request, wherein the first and second frames comprise same medium reservation information for reserving the medium, and refraining from accessing the medium based on the medium reservation information.

Certain aspects provide an apparatus for wireless communications. The apparatus generally includes a detector configured to detect a request to use a medium transmitted by a first apparatus, wherein the detector is also configured to detect a first frame transmitted by the first apparatus confirming receipt of a second frame transmitted by a second apparatus in response to the request, and wherein the first and second frames comprise same medium reservation information for reserving the medium, and a transmitter configured to refrain from accessing the medium based on the medium reservation information.

Certain aspects provide an apparatus for wireless communications. The apparatus generally includes means for detecting a request to use a medium transmitted by a first apparatus, means for detecting a first frame transmitted by the first apparatus confirming receipt of a second frame transmitted by a second apparatus in response to the request, wherein the first and second frames comprise same medium reservation information for reserving the medium, and means for refraining from accessing the medium based on the medium reservation information.

Certain aspects provide a computer-program product for wireless communications. The computer-program product includes a computer-readable medium comprising instructions executable to detect a request to use a medium transmitted by an apparatus, detect a first frame transmitted by the apparatus confirming receipt of a second frame transmitted by another apparatus in response to the request, wherein the first and second frames comprise same medium reservation information for reserving the medium, and refrain from accessing the medium based on the medium reservation information.

Certain aspects provide a wireless node. The wireless node generally includes at least one antenna, a detector configured to detect a request to use a medium received via the at least one antenna transmitted by a first wireless node, wherein the detector is also configured to detect a first frame received via the at least one antenna transmitted by the first wireless node confirming receipt of a second frame transmitted by a second wireless node in response to the request, and wherein the first and second frames comprise same medium reservation information for reserving the medium, and a transmitter configured to refrain from accessing the medium based on the medium reservation information.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.

FIG. 1 illustrates an example wireless communication system in accordance with certain aspects of the present disclosure.

FIG. 2 illustrates a system that allows two nodes to communicate in accordance with certain aspects of the present disclosure.

FIG. 3 illustrates an example of a communication device in accordance with certain aspects of the present disclosure.

FIG. 4 illustrates an example of a presence of hidden wireless node in a wireless network in accordance with certain aspects of the present disclosure.

FIG. 5 illustrates example operations that may be executed at a user station (STA) requesting a medium for transmission in accordance with certain aspects of the present disclosure.

FIG. 5A illustrates example components capable of performing the operations illustrated in FIG. 5.

FIG. 6 illustrates example operations that may be executed at a STA listening for request(s) for a medium in accordance with certain aspects of the present disclosure.

FIG. 6A illustrates example components capable of performing the operations illustrated in FIG. 6.

FIG. 7 illustrates an example control frame structure used for reserving a medium in accordance with certain aspects of the present disclosure.

FIG. 8 illustrates an example protocol used for reserving a medium in accordance with certain aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

### AN EXAMPLE WIRELESS COMMUNICATION SYSTEM

The techniques described herein may be used for various broadband wireless communication systems, including communication systems that are based on an orthogonal multiplexing scheme. Examples of such communication systems include Orthogonal Frequency Division Multiple Access (OFDMA) systems, Single-Carrier Frequency Division Multiple Access (SC-FDMA) systems, and so forth. An OFDMA system utilizes orthogonal frequency division multiplexing (OFDM), which is a modulation technique that partitions the overall system bandwidth into multiple orthogonal sub-carriers. These sub-carriers may also be called tones, bins, etc. With OFDM, each sub-carrier may be independently modulated with data. An SC-FDMA system may utilize interleaved FDMA (IFDMA) to transmit on sub-carriers that are distributed across the system bandwidth, localized FDMA (LFDMA) to transmit on a block of adjacent sub-carriers, or enhanced FDMA (EFDMA) to transmit on multiple blocks of adjacent sub-carriers. In general, modulation symbols are sent in the frequency domain with OFDM and in the time domain with SC-FDMA.

The teachings herein may be incorporated into (e.g., implemented within or performed by) a variety of wired or wireless apparatuses (e.g., nodes). In some aspects, a wireless node implemented in accordance with the teachings herein may comprise an access point or an access terminal.

An access point ("AP") may comprise, be implemented as, or known as NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, Basic Service Set ("BSS"), Extended Service Set ("ESS"), Radio Base Station ("RBS"), or some other terminology.

An access terminal ("AT") may comprise, be implemented as, or known as an access terminal, a subscriber station, a subscriber unit, a mobile terminal, a remote station, a remote terminal, a user terminal, a user agent, a user device, user equipment, a user station, or some other terminology. In some implementations, an access terminal may comprise a cellular telephone, a cordless telephone, a Session Initiation Protocol ("SIP") phone, a wireless local loop ("WLL") station, a personal digital assistant ("PDA"), a handheld device having wireless connection capability, a Station ("STA"), or some other suitable processing device connected to a wireless modem. Accordingly, one or more aspects taught herein may be incorporated into a phone (e.g., a cellular phone or smart phone), a computer (e.g., a laptop), a portable communication device, a portable computing device (e.g., a personal data assistant), an entertainment device (e.g., a music or video device, or a satellite radio), a global positioning system device, or any other suitable device that is configured to communicate via a wireless or wired medium. In some aspects the node is a wireless node. Such wireless node may provide, for example, connectivity for or to a network (e.g., a wide area network such as the Internet or a cellular network) via a wired or wireless communication link. The wireless node may comprise an access point or an access terminal.

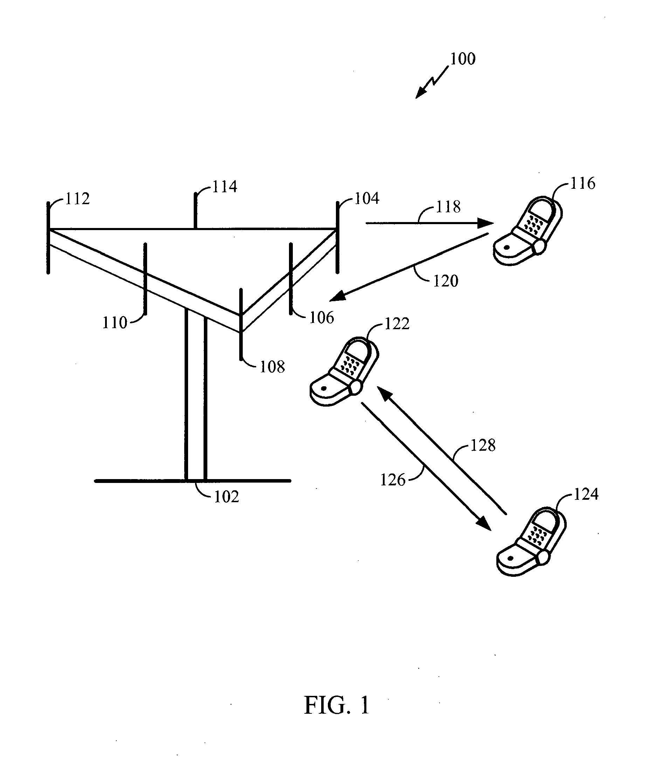

Referring now to FIG. 1, illustrated is a wireless communication system 100 in accordance with various aspects of the present disclosure. System 100 comprises a base station (i.e., an access point) 102 that can include multiple antenna groups. For example, one antenna group can include antennas 104 and 106, another group can comprise antennas 108 and 110, and an additional group can include antennas 112 and 114. Two antennas are illustrated for each antenna group; however, more or fewer antennas can be utilized for each group. The base station 102 can additionally include a transmitter chain and a receiver chain, each of which can in turn comprise a plurality of components associated with signal transmission and reception (e.g., processors, modulators, multiplexers, demodulators, demultiplexers, antennas, and so forth), as will be appreciated by one skilled in the art. Additionally, the base station 102 can be a home base station, a Femto base station, and/or the like.

The base station 102 can communicate with one or more devices such as device 116; however, it is to be appreciated that base station 102 can communicate with substantially any number of devices similar to device 116. As depicted, device 116 is in communication with antennas 104 and 106, where antennas 104 and 106 transmit information to device 116 over a forward link 118 and receive information from device 116 over a reverse link 120. In a frequency division duplex (FDD) system, forward link 118 can utilize a different frequency band than that used by reverse link 120, for example. Further, in a time division duplex (TDD) system, forward link 118 and reverse link 120 can utilize a common frequency band.

In addition, devices 122 and 124 can be communicating with one another, such as in a peer-to-peer configuration. Moreover, device 122 is in communication with device 124 using links 126 and 128. In a peer-to-peer ad hoc network, devices within range of each other, such as devices 122 and 124, communicate directly with each other without a base station 102 and/or a wired infrastructure to relay their communication. Additionally, peer devices or nodes can relay traffic. The devices within the network communicating in a peer-to-peer manner can function similar to base stations and relay traffic or communications to other devices, functioning similar to base stations, until the traffic reaches its ultimate destination. The devices can also transmit control channels, which carry information that can be utilized to manage the data transmission between peer nodes.

A communication network can include any number of devices or nodes that are in wireless (or wired) communication. Each node can be within range of one or more other nodes and can communicate with the other nodes or through utilization of the other nodes, such as in a multi-hop topography (e.g., communications can hop from node to node until reaching a final destination). For example, a sender node may wish to communicate with a receiver node. To enable packet transfer between sender node and receiver node, one or more intermediate nodes can be utilized. It should be understood that any node can be a sender node and/or a receiver node and can perform functions of either sending and/or receiving information at substantially the same time (e.g., can broadcast or communicate information at about the same time as receiving information) or at different times.

System 100 can be configured to allow nodes that have initiated a communication session over a network to move the session to a direct connection. Nodes that are directly connected can exchange packets natively without any encapsulation. In accordance with some aspects, a "homeless" node can switch to a wireless network without losing its ongoing sessions. By "homeless" it is meant a node that does not have any home agent entity to provide assistance for keeping ongoing sessions alive while switching to foreign networks nor to forward any new incoming request(s) to establish new sessions to the node's current location. In accordance with some aspects, nodes can be mobile (e.g., wireless), static (e.g., wired), or combinations thereof (e.g., one node static and a second node mobile, both nodes mobile, and so forth).

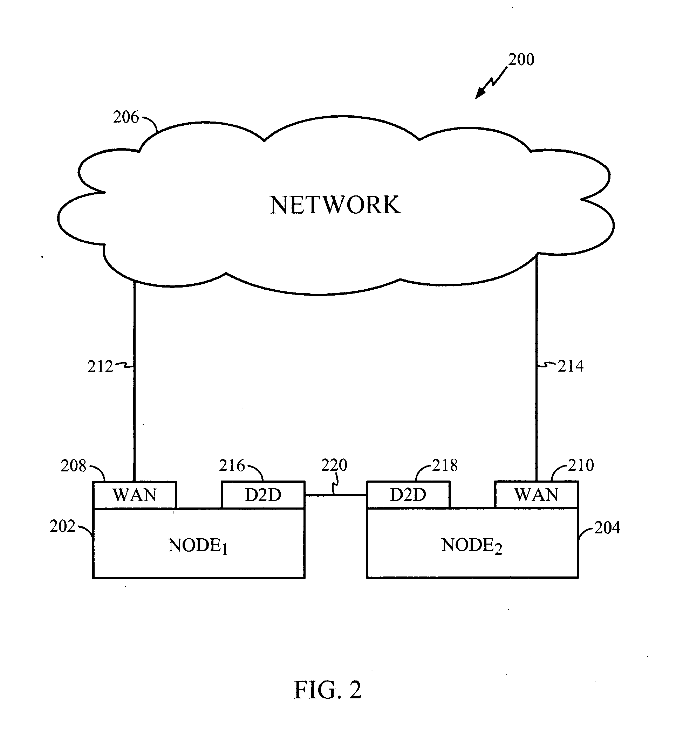

FIG. 2 illustrates a system 200 that allows two nodes to communicate over a Wide Area Network interface and/or a Device to Device interface, according to various aspects. Included in the system 200 are a first node (Node₁) 202 and a second node (Node₂) 204. Each of the nodes 202 and 204 includes at least two interfaces. A first interface can be connected to a network 206 that provides Internet Protocol (IP) addresses. For example, the network can be a Wide Area Network (WAN), a Local Area Network (LAN), a home network, Digital Subscriber Line (DSL), cable, 3GPP (3^{rd} Generation Partnership Project) based, 3GPP2 (3rd Generation Partnership Project 2) based, or any other technology providing interconnectivity and routing to a network of interest (e.g., the Internet).

Interfaces of the nodes 202 and 204 can be wired (e.g., Device to Device), wireless (e.g., WAN), or combinations thereof. For example, Node₁ interface can be wireless and Node₂ interface can be wired, or Node₂ interface can be wireless and Node₁ interface can be wired, both interfaces can be wireless, or both interfaces can be wired.

For illustration purposes, the first interface of each node 202, 204 is a WAN interface, 208 and 210. The WAN interfaces 208, 210 provide a connection over network 206, illustrated by links 212 and 214. Further, each node 202, 204 includes at least a second interface that is connected to a local network with directly connected peers or a multi-hop mesh network. For example, the local network can be a Wireless Local Area Network (WLAN) or another device to device (e.g., peer to peer) technology. For illustration purposes, the second interface of each node 202, 204 is illustrated as a Device to Device (D2D) interface 216, 218. The D2D interfaces 216, 218 allow nodes 202, 204 to perform direct communications, illustrated by direct link 220.

A procedure according to various aspects for starting a session over network 206 and moving to a direct session (e.g., over direct link 220) will now be described. For example purposes, it is assumed that Node₁ 202 utilizes Mobile Internet Protocol (IP). Communications are performed by Node₁ 202 utilizing its Mobile IP home address as a source address. A home address is a unicast routable address assigned to a node and is used as the permanent address of the node. Node₁ 202 communicates with Node₂ 204 over network 206 (e.g., WAN) by sending and receiving packets over respective first interfaces (e.g., WAN interfaces 208, 210). The packets can be encapsulated in a MIPv6 tunnel to a home agent, which can be included in network 206 according to various aspects, or a route optimization tunnel directly to Node₂ 204.

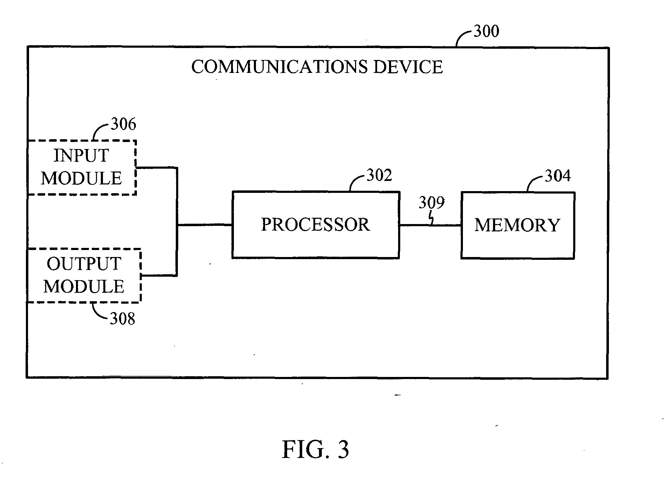

FIG. 3 illustrates an exemplary first communications device 300, in accordance with an exemplary aspect. Exemplary first communications device 300 is, e.g., one of the wireless communications devices (102, 116, 122, 124) of FIG. 1 or one of the wireless communications devices (202, 204) of FIG. 2.

First communications device 300 includes a processor 302 and memory 304 coupled together via a bus 309 over which the various elements (302, 304) may interchange data and information. Communications device 300 further includes an input module 306 and an output module 308 which may be coupled to processor 302 as shown. However, in some aspects, the input module 306 and output module 308 are located internal to the processor 302. Input module 306 can receive input signals. Input module 306 can, and in some aspects does, include a wireless receiver and/or a wired or optical input interface for receiving input. Output module 308 may include, and in some aspects does include, a wireless transmitter and/or a wired or optical output interface for transmitting output.

Processor 302 is configured to: receive a first signal from a second communications device; generate a first application alert if said first signal satisfies an application alert criteria; and receive a second signal from an access point said second signal carrying second communications device information based on a previous signal from the second communications device. The access point may be, and sometimes is, a base station. In some aspects, the second communications device information is location information. In various aspects, processor 302 is configured to receive said first signal via a wireless peer to peer interface as part of being configured to receive a first signal. In some aspects, processor 302 is configured to receive the second signal via a wireless wide area network interface as part of being configured to receive the second signal.

Processor 302 is further configured to determine an operation to take based on the second communications device information included in the second signal and information included in said first signal. In one exemplary aspect, said second communications device information included in the second signal is information on a previous location of said second communications device, said information included in the first signal is current location information, and said operation is one of a location based traffic update operation and a location based advertisement update operation. Processor 302, in some aspects, is further configured to send an information request signal to the access point requesting information corresponding to the second communications device, in response to the generated first application alert.

### MEDIUM RESERVATION AND VIRTUAL CARRIER SENSING

Each mobile device (i.e., user station (STA)) of the wireless system 100 from FIG. 1, each of the nodes (STAs) 202, 204 in the network 206 of the system 200 from FIG. 2, and the communications device (STA) 300 from FIG. 3 may maintain its associated Network Allocation Vector (NAV) counter. The NAV counter may represent a counter in time units for which a STA may not initiate a connection over a medium with a peer entity even if physical carrier sensing shows that the medium is available for communication. The NAV counter may be decremented every time unit, and the STA may assume that the medium is reserved until the NAV counter elapses.

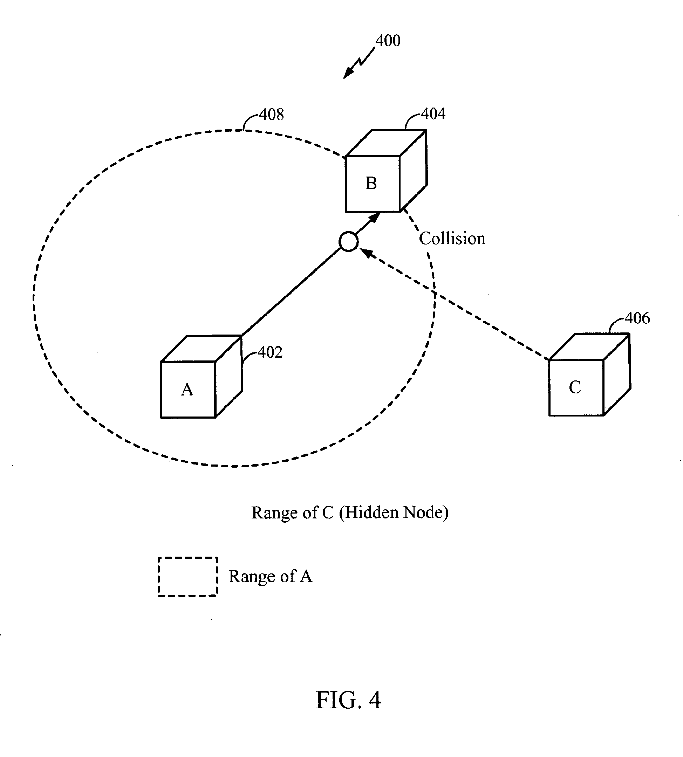

FIG. 4 illustrates an example 400 of communication between a pair of STAs in a presence of hidden wireless node (e.g., user STA) in accordance with certain aspects of the present disclosure. A STA 402 may initiate a transmission with another STA 404 when NAV of the STA 402 is empty and physical carrier sensing indicates the medium is empty. The STA 402 may initiate transmission by sending a Request-to-send (RTS) frame that may comprise duration of time for which the STA 402 wants to reserve the medium. In response to receiving the RTS request frame, the STA 404 may send a Clear-to-send (CTS) response frame, if its NAV is empty and physical carrier sensing indicates that the medium is empty. The CTS frame may also comprise duration of time for which the requested medium is to be reserved.

Any STA other than the STAs 402, 404 who receive either the RTS request frame or the CTS control frame may set its NAV counter according to the time duration field in these two control frames. This represents virtual carrier sensing, and also this is how the STAs 402, 404 may achieve the medium reservation. As illustrated in FIG. 4, a STA 406 may be out of range 408 of the STA 402 and, hence, the STA 406 may not be able to receive the RTS message sent from the STA 402. However, the STA 406 may be able to receive the CTS frame sent from the STA 404 and to accordingly set its NAV counter.

When the STA 402 transmits the RTS frame, the STA 402 may not be aware if the requested medium is indeed available at the STA 404. With its NAV counter, the STA 402 may only be aware that the medium is available at the STA 402. If the medium is not available at the STA 404, i.e., the NAV counter of STA 404 is not zero or physical carrier sensing indicates a transmission, then the STA 404 may not transmit the CTS frame in response to the received RTS frame. This may happen, for example, if the STA 402 transmits the RTS frame in the same time when the STA 406 is transmitting data to the STA 404.

In the above scenario, any STA who receives the RTS frame transmitted from the STA 402 may set its NAV counter to a duration value specified within the RTS frame. Since the STA 404 may not honor the RTS request of the STA 402, then the STAs receiving the RTS request may not be transmitting. Therefore, the medium may remain unused, which may create a problem of resource wastage.

In an aspect, the problem of resource wastage may be circumvented by requiring that the STAs who receive the RTS request frame may wait for some duration of time after which the CTS response frame is supposed to be transmitted. Then, the STAs may try to decode a packet being transmitted from the STA 402. If the STAs are able to decode this packet, then the STAs may assume that the RTS request frame transmitted from the STA 402 was honored by its peer entity (STA 404), and the STAs may keep their NAV counters. On the other hand, if no packet transmission is detected at the STAs within a defined period of time, then the STAs may reset their NAV counters.

The aforementioned solution is, however, restricted because only a certain kind of Media Access Control (MAC) protocol can be supported. For example, it may not be possible to extend this solution to a directional MAC. The RTS and CTS frames may represent, in general, low rate control frames. Decoding a packet transmitted by the STA 402 may require that a packet header is of the same or lower rate compared to a rate of the RTS frame, thereby restricting the use of such solution to a specific physical layer (PHY).

The aforementioned solution may be specific to the traditional IEEE 802.11 MAC where the RTS, CTS and packet transmissions are performed back to back in time, i.e., where there is a natural succession of frames. However, if the packet transmission is further in the future, then decoding the packet may require waiting for a longer duration of time. In addition, the CTS frame may be allowed to modify the request for the medium, e.g., the STA 404 may allocate a smaller duration of time than requested by the STA 402. In this case, decoding of the packet header may not be sufficient to determine that the medium is reserved.

A MAC protocol can be considered to be directional if the RTS and CTS frames are not sent omni-directionally but only in a specific direction using beamforming antennas. This may happen in the case of high frequency communication networks, such as 60 GHz networks, where the beamforming gain may be essential to any kind of packet decoding. In such case, not only the RTS and CTS frames may be transmitted in specific directions, but the NAV counters may be directional, i.e., STAs who may hear the RTS frame in a certain direction may refrain from transmitting only in the direction in which the RTS frame was received.

Therefore, during a certain period of time, a STA may observe RTS frames received in more than one direction from different STAs. While the STA may be able to decode different RTS frames in different directions (e.g., by rotating its beam), during the time of packet transmission, the STA may need to consecutively listen in one direction to decode the packet. In this case, it may not be possible for the STA receiving different RTS frames in different directions to decode the packets transmitted along those directions.

### SOLUTION FOR VIRTUAL CARRIER SENSING IN CASE OF HIDDEN NODE BASED ON ADDITIONAL CONTROL FRAME

Certain aspects of the present disclosure support the use of another control frame, i.e., a CTS confirmation frame, to solve the aforementioned virtual carrier sensing problem in the case of hidden wireless node, such as the STA 406 illustrated in FIG. 4. The CTS confirmation frame may be transmitted by the same STA who transmits the RTS frame following successful decoding of a CTS frame (e.g., by the STA 402 from FIG. 4).

A CTS confirmation frame may comprise the same medium reservation information as indicated in the CTS control frame. In general, the CTS control frame may comprise additional information beside time duration information for reserving the medium. For example, both the CTS control frame and the CTS confirmation frame may also comprise at least one of: information indicating what frequencies may be utilized during transmission, what time segment of a data frame may be allowed for communication, or information indicating whether the medium reservation is periodic or represents one time reservation.

In an aspect of the present disclosure, any STA other than the STA 404 who decodes the CTS confirmation frame may set its NAV counter according to the information in the CTS confirmation frame and according to the underlying MAC protocol. Everything else may remain the same as required before by the MAC. However, the information contained in the CTS confirmation frame may be utilized instead of the information from the RTS frame.

It should be noted that the purpose of the CTS confirmation frame may not be to acknowledge the receipt of CTS frame by the STA 402. Decoding of the CTS confirmation frame may not be required by the STA 404, and the use of CTS confirmation frame as an acknowledgement represents additional benefit of this control mechanism.

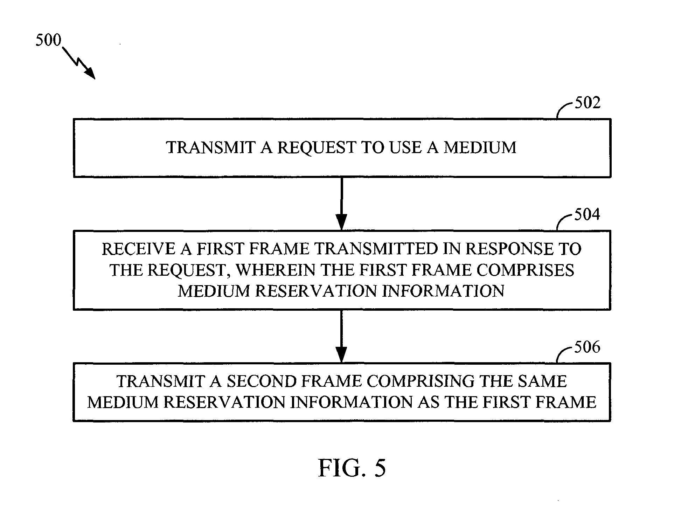

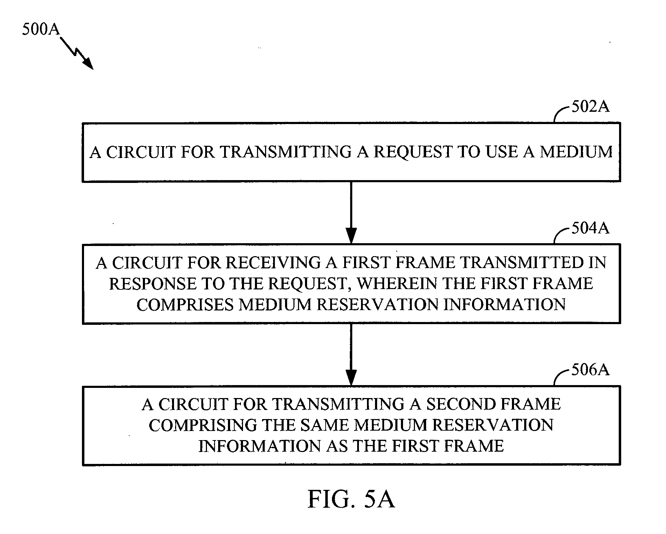

FIG. 5 illustrates example operations 500 that may be executed at a user STA requesting a medium for transmission in accordance with certain aspects of the present disclosure. At 502, the user STA may transmit a request (i.e., a RTS frame) to use the medium. At 504, the STA may receive a first frame (i.e., a CTS frame) transmitted in response to the request, wherein the first frame may comprise medium reservation information. At 506, in response to the first frame, the STA may transmit a second frame (i.e., a CTS confirmation frame) comprising the same medium reservation information as the first frame.

In an aspect, the request may comprise an indication of a first duration of time for which it is requested to use the medium, wherein the medium reservation information of the first and second frames may comprise an indication of a second duration of time for which the medium is granted. The granted second duration may be different from the requested first duration. In an aspect, the medium reservation information may indicate at least one of: frequencies of the medium to be used by the STA for transmission, one or more time segments of a data frame allowed for transmission from the STA, or whether reservation of the medium is periodic.

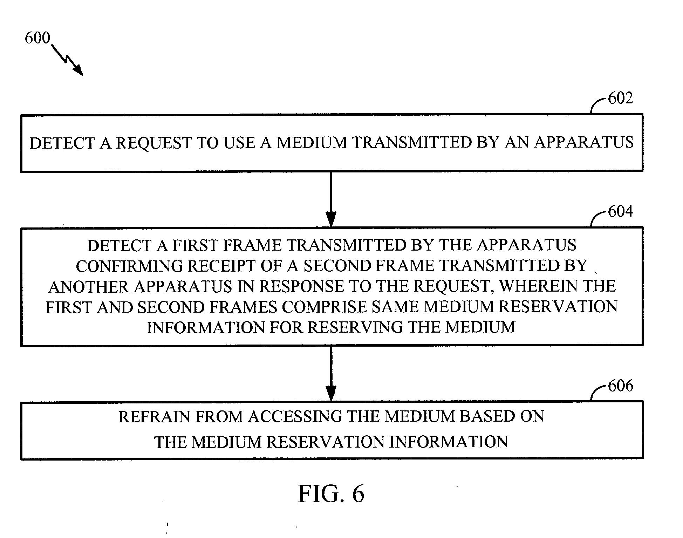

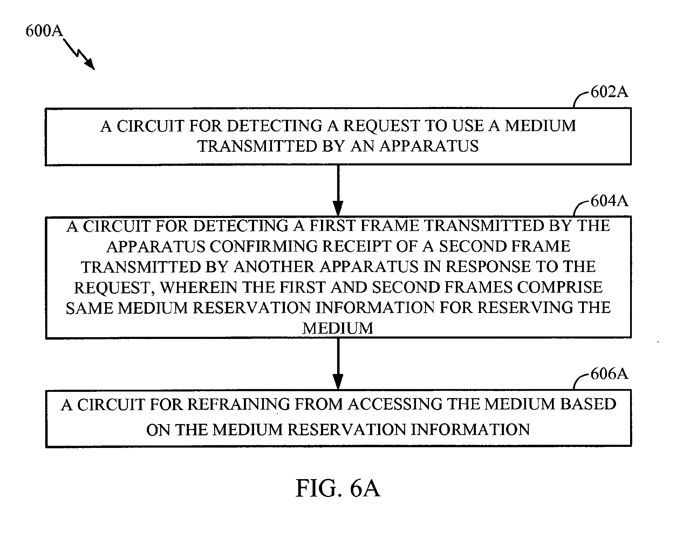

FIG. 6 illustrates example operations 600 that may be executed at a user STA listening for the request for a medium transmitted by another STA in accordance with certain aspects of the present disclosure. At 602, the STA may detect a request to use the medium (i.e., a RTS frame). At 604, the STA may detect a first frame (i.e., a CTS confirmation frame) transmitted by the other STA confirming receipt of a second frame (i.e., a CTS frame) transmitted by a third STA in response to the request, wherein the first and second frames may comprise the same medium reservation information for reserving the medium. At 606, the STA may refrain from accessing the medium based on the medium reservation information. In an aspect, a value of Network Allocation Vector (NAV) counter may be set at the STA according to the medium reservation information, wherein the value of NAV counter may comprise a number of time units for which the STA refrains from accessing the medium.

By detecting the first frame, the STA may determine a direction along which the first frame was transmitted from the other STA. Then, the STA may refrain from transmitting over the medium in the determined direction. As noted above, the medium reservation information may further comprise an indication about frequencies of the medium to be used by the other STA. The STA may refrain from transmitting using these specific frequencies of the medium, while it may access the medium using some other frequencies.

In the case of Directional MAC protocol, a direction in which the CTS confirmation frame is transmitted can be important. If the CTS confirmation frame is being utilized for channel reservation for data transmission, and the RTS and CTS frames are both transmitted along a specific direction, then the CTS confirmation frame may be also transmitted in that same direction. If the RTS and CTS frames are being transmitted in the lighthouse fashion to reserve the channel for beam training (i.e., transmitted along all supported directions of corresponding STAs), then the CTS confirmation frame may be also transmitted in the lighthouse fashion along the same directions used for transmission of the RTS frame.

In an aspect, the proposed 'RTS-CTS-CTS confirmation' protocol may be utilized for beam training purposes without requiring any extra medium (channel) reservation. Referring back to FIG. 4, the RTS frame may be transmitted by the STA 402 along each supported transmit direction in the lighthouse fashion. The transmit beam index of the RTS frame may be either explicitly included in the RTS frame, or it may be deduced from the relative timing of the RTS frame compared to a reference time. The RTS frame may be decoded by the STA 404 by rotating a receive beam in the lighthouse fashion. By decoding the RTS frame, the STA 404 may determine a preferred receive beam direction of the STA 404 and a preferred transmit beam direction of the STA 402.

Then, the STA 404 may transmit the CTS response frame in the lighthouse fashion along all supported transmit directions of the STA 404. The CTS frame may comprise a field indicating the previously determined preferred transmit beam of the STA 402. The STA 402 may try to decode the CTS frame by rotating a receive beam in the lighthouse fashion along all possible receive beam directions. After decoding the CTS frame, the STA 402 may determine a preferred receive beam direction of the STA 402 (e.g., a direction for which the CTS frame may be decoded with a highest signal-to-noise ratio), as well as a preferred transmit beam direction of the STA 404.

In one aspect of the present disclosure, the CTS confirmation frame may be transmitted by the STA 402 in the lighthouse fashion using all available transmit beam directions. In another aspect, to save resources, the CTS confirmation frame may be transmitted only once using the preferred transmit beam direction of the STA 402. The STA 404 may decode the CTS confirmation frame using its preferred receive beam direction, which may be previously determined by decoding the RTS frame. Therefore, for directional MAC designs in which 'RTS-CTS-CTS confirmation' protocol is used for beam training purposes, unlike the RTS and CTS frames, the CTS confirmation frame may not need to be transmitted in the lighthouse fashion. Hence, the cost incurred in transmitting the CTS confirmation frame may be low.

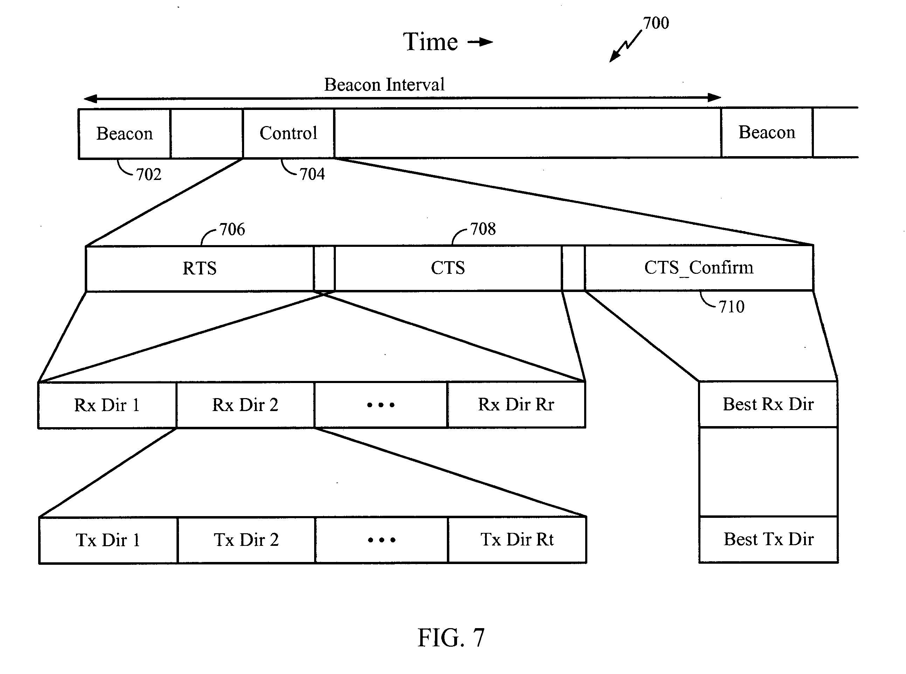

FIG. 7 illustrates an example transmission of a super-frame structure 700 for one beacon interval in accordance with certain aspects of the present disclosure. The super-frame 700 may comprise a beacon 702 and a control frame 704. The control frame 704 may comprise an RTS sub-frame 706, a CTS sub-frame 708 and a CTS confirmation sub-frame 710 representing the proposed 'RTS-CTS-CTS confirmation' protocol for virtual carrier sensing and medium reservation. As illustrated in FIG. 7, both the RTS sub-frame 706 and the CTS sub-frame 708 may be transmitted and decoded in the lighthouse fashion for beam training purposes. On the other hand, the CTS confirmation sub-frame 710 may be transmitted along only one transmit direction (e.g., along a preferred transmit direction), and may be decoded along only one receive direction (e.g., along a preferred receive direction).

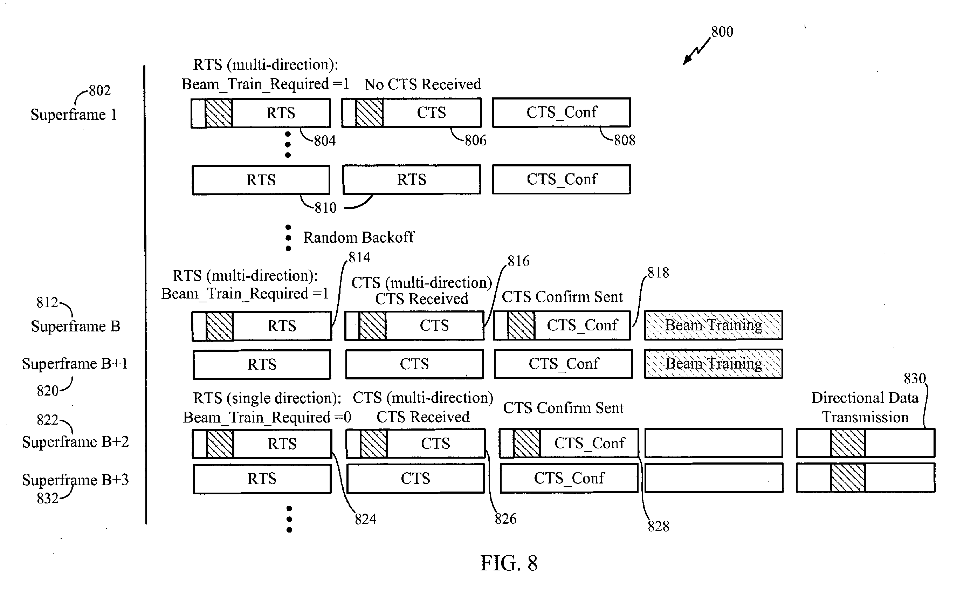

FIG. 8 illustrates an example of a hierarchical 'RTS-CTS-CTS confirmation' protocol 800 for medium (channel) reservation in accordance with certain aspects of the present disclosure. In a super-frame 802, a STA may transmit an RTS frame 804 to request a medium. The RTS frame 804 may be transmitted in multiple transmit directions of the STA, if a flag of the super-frame 802 is indicating that beam training is required (i.e., the flag 'Beam_Train_Required' is equal to '1', as illustrated in FIG. 8). If a CTS frame 806 is not received at the STA, a CTS confirmation frame 808 may not be transmitted from the STA. The STA may continue requesting the medium by transmitting RTS frames 810 until a random backoff is activated, as illustrated in FIG. 8.

After the random backoff expires, the STA may transmit an RTS frame 814 within a super-frame 812 using multiple transmit directions of the STA, as specified by a beam training flag of the super-frame 812. Then, the STA may receive, using multiple receive directions of the STA, a CTS frame 816 transmitted by another STA in response to the reception of RTS frame 814. Once the CTS frame 816 is received, a CTS confirmation frame 818 may be transmitted comprising the same medium reservation information as the received CTS frame 816. As illustrated in FIG. 8, along with reserving the medium, the STA may perform beam training based on the RTS, CTS and CTS confirmation frames 814-818. The same procedure of reserving the medium and beam training based on multi-direction RTS frame, CTS frame and CTS confirmation frame may be also performed for a super-frame 820.

In a following super-frame 822, the STA may transmit an RTS frame 824 using only one transmit direction, as specified by a beam training flag of the super-frame 822. Then, the STA may receive, using only one receive direction, a CTS frame 826 transmitted by another STA in response to the reception of RTS frame 824. Once the CTS frame 826 is received at the STA, a CTS confirmation frame 828 may be transmitted comprising the same medium reservation information as the received CTS frame 826. In an aspect, the CTS confirmation frame 828 may be transmitted in the same single transmit direction of the STA utilized for transmission of the RTS frame 824. After the medium is being reserved, data 830 of the super-frame 822 may be directionally transmitted by the STA using, for example, the same direction as for transmitting the RTS frame 824 and the CTS confirmation frame 828. The same procedure for medium reservation may be also applied for a super-frame 832, as illustrated in FIG. 8.

The various operations of methods described above may be performed by any suitable means capable of performing the corresponding functions. The means may include various hardware and/or software component(s) and/or module(s), including, but not limited to a circuit, an application specif integrate circuit (ASIC), or processor. Generally, where there are operations illustrated in Figures, those operations may have corresponding counterpart means-plus-function components with similar numbering. For example, operations 500 and 600 illustrated in FIG. 5 and FIG. 6 correspond to components 500A and 600A illustrated in FIG. 5A and FIG. 6A.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

As used herein, a phrase referring to "at least one of" in a list of items refers to any combination of those items, including single members. As an example, "at least one of: *a, b,* or *c*" is intended to cover: *a, b, c, a-b*, *a-c, b-c, and a-b-c.*

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

For example, the means for transmitting may comprise a transmitter, e.g., the output module 308 of the communications device 300 from FIG. 3. The means for receiving may comprise a receiver, e.g., the input module 306 of the communications device 300. The means for decoding may comprise a decoder, e.g., the processor 302 of the communications device 300. The means for determining may comprise an application specific integrated circuit, e.g., the processor 302 of the communications device 300. The means for detecting may comprise a detector, e.g., the processor 302 of the communications device 300. The means for refraining may comprise a transmitter, e.g., the output module 308 of the communications device 300. The means for setting may comprise an application specific integrated circuit, e.g., the processor 302 of the communications device 300.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

## Claims

1. A method (500) for wireless communications, comprising:
transmitting (502) a request (706) to use a medium;
receiving (504) a first frame (708) transmitted in response to the request, wherein the first frame comprises medium reservation information; and
transmitting (506) a second frame (710) comprising the same medium reservation information as the first frame,
wherein the request is transmitted in a plurality of transmit directions, and the first frame further comprises an indication of a preferred transmit direction determined based on the plurality of transmit directions, wherein the second frame is transmitted in the preferred transmit direction.

2. The method (500) of claim 1, further comprising:
decoding the first frame to determine the medium reservation information.

3. The method (500) of claim 1, wherein the request comprises at least one indication of each transmit direction of the plurality of transmit directions in which the request is transmitted.

4. The method (500) of claim 1, wherein:
the first frame was transmitted in a plurality of transmit directions; and
the second frame comprises an indication of a preferred transmit direction determined based on the plurality of transmit directions.

5. The method (500) of claim 1, further comprising:
receiving the first frame using a plurality of receive directions; and
determining a preferred receive direction based on the plurality of receive directions.

6. The method (500) of claim 1, wherein:
the request comprises an indication of a first duration of time for which it is requested to use the medium; and
the medium reservation information comprises an indication of a second duration of time for which the medium is granted.

7. The method (500) of claim 1, wherein:
the medium reservation information indicates at least one of: frequencies of the medium to be used for transmission, one or more time segments of a data frame allowed for transmission, or whether reservation of the medium is periodic.

8. An apparatus (500A) for wireless communications, comprising:
means (502A) for transmitting a request (706) to use a medium;
means (504A) for receiving a first frame (708) transmitted in response to the request, wherein the first frame comprises medium reservation information; and
means (506A) for transmitting a second frame (710) comprising the same medium reservation information as the first frame, wherein the request is transmitted in a plurality of transmit directions, and the first frame further comprises an indication of a preferred transmit direction determined based on the plurality of transmit directions, wherein the second frame is transmitted in the preferred transmit direction.

9. A method (600) for wireless communications, comprising:
detecting (602) a request to use a medium transmitted by a first apparatus in a plurality of transmit directions;
detecting (604) a first frame transmitted by the first apparatus and a preferred direction along which the first frame was transmitted, said first frame confirming receipt of a second frame transmitted by a second apparatus in response to the request, wherein said second frame comprises an indication of said preferred transmit direction determined by said second apparatus based on the plurality of transmit directions, wherein the first and second frames comprise same medium reservation information for reserving the medium; and
refraining (606) from transmitting over the medium in the determined direction based on the medium reservation information.

10. The method (600) of claim 9, wherein:
the medium reservation information comprises an indication of a duration of time for which the medium is granted to the first apparatus, and the method further comprising
refraining from accessing the reserved medium for the duration of time.

11. The method (600) of claim 10, wherein the duration of time indicated in the medium reservation information is different than other duration of time indicated in the request.

12. The method (600) of claim 9, wherein:
the medium reservation information comprises an indication about frequencies of the medium to be used by the first apparatus, and the method further comprising
refraining from transmitting using the frequencies of the medium reservation information.

13. The method (600) of claim 9, further comprising:
setting, at an apparatus, a value of Network Allocation Vector (NAV) counter according to the medium reservation information, wherein
the value of NAV counter comprises a number of time units for which the apparatus refrains from accessing the medium.

14. An apparatus (600A) for wireless communications, comprising:
means (602A) for detecting a request (706A) to use a medium transmitted by a first apparatus in a plurality of transmit directions;
means (604A) for detecting a first frame (708) transmitted by the first apparatus and a preferred direction along which the first frame was transmitted, said frame confirming receipt of a second frame (710) transmitted by a second apparatus in response to the request, wherein said second frame comprises an indication of said preferred transmit direction determined by said second apparatus based on the plurality of transmit directions, wherein the first and second frames comprise same medium reservation information for reserving the medium; and
means (606A) for refraining from transmitting over the medium in the determined direction based on the medium reservation information and the detected preferred direction.

15. A computer-program product for wireless communications, comprising a computer-readable medium comprising instructions executable to carry out the steps of any of claims 1 to 7 or 9 to 13.

## Patentansprüche

1. Ein Verfahren (500) für Drahtloskommunikationen, das Folgendes aufweist:
Senden (502) einer Anfrage (706) ein Medium zu nutzen;
Empfangen (504) eines ersten Rahmens (708), der ansprechend auf die Anfrage gesendet wird, wobei der erste Rahmen Mediumreservierungsinformation aufweist; und
Senden bzw. Übertragen (506) eines zweiten Rahmens (710), der dieselbe Mediumreservierungsinformation aufweist wie der erste Rahmen,
wobei die Anfrage in einer Vielzahl von Senderichtungen gesendet wird; und der erste Rahmen weiter eine Anzeige einer bevorzugten Senderichtung aufweist, die basierend auf der Vielzahl von Senderichtungen bestimmt wird, wobei der zweite Rahmen in der bevorzugten Senderichtung gesendet wird.

2. Verfahren (500) nach Anspruch 1, das weiter Folgendes aufweist:
Decodieren des ersten Rahmens, um die Mediumreservierungsinformation zu bestimmen.

3. Verfahren (500) nach Anspruch 1, wobei die Anfrage wenigstens eine Anzeige jeder Senderichtung der Vielzahl von Senderichtungen aufweist, in die die Anfrage gesendet wird.

4. Verfahren (500) nach Anspruch 1, wobei:
der erste Rahmen in einer Vielzahl von Senderichtungen gesendet wurde; und
der zweite Rahmen eine Anzeige einer bevorzugten Senderichtung aufweist, die basierend auf der Vielzahl von Senderichtungen bestimmt wird.

5. Verfahren (500) nach Anspruch 1, das weiter Folgendes aufweist:
Empfangen des ersten Rahmens unter Verwendung einer Vielzahl von Empfangsrichtungen; und
Bestimmen einer bevorzugten Empfangsrichtung basierend auf der Vielzahl von Empfangsrichtungen.

6. Verfahren (500) nach Anspruch 1, wobei:
die Anfrage eine Anzeige einer ersten Zeitdauer aufweist, für die angefragt wird, das Medium zu nutzen; und
die Mediumreservierungsinformation eine Anzeige einer zweiten Zeitdauer aufweist, für die das Medium erteilt bzw. zugeteilt ist.

7. Verfahren (500) nach Anspruch 1, wobei:
die Mediumreservierungsinformation wenigstens eines von Folgendem anzeigt: Frequenzen des Mediums, die für die Sendung bzw. Übertragung verwendet werden sollen, eines oder mehrere Zeitsegmente eines Datenrahmens, das bzw. die für die Sendung gestattet ist bzw. sind oder ob die Reservierung des Mediums periodisch ist.

8. Eine Vorrichtung (500A) für Drahtloskommunikationen, die Folgendes aufweist:
Mittel (502A) zum Senden bzw. Übertragen einer Anfrage (706) ein Medium zu nutzen;
Mittel (504A) zum Empfangen eines ersten Rahmens (708), der ansprechend auf die Anfrage gesendet wird, wobei der erste Rahmen Mediumreservierungsinformation aufweist; und
Mittel (506A) zum Senden bzw. Übertragen eines zweiten Rahmens (710), der dieselbe Mediumreservierungsinformation aufweist wie der erste Rahmen, wobei die Anfrage in einer Vielzahl von Senderichtungen gesendet wird, und wobei der erste Rahmen weiter eine Anzeige einer bevorzugten Senderichtung aufweist, die basierend auf der Vielzahl von Senderichtungen bestimmt wird, wobei der zweite Rahmen in der bevorzugten Senderichtung gesendet wird.

9. Ein Verfahren (600) für Drahtloskommunikationen, das Folgendes aufweist:
Detektieren (602) einer Anfrage, ein Medium zu verwenden, die von einer ersten Vorrichtung in eine Vielzahl von Senderichtungen gesendet wird;
Detektieren (604) eines ersten Rahmens, der von der ersten Vorrichtung gesendet wird, und einer bevorzugten Richtung, in die der ersten Rahmen gesendet wurde, wobei der erste Rahmen einen Empfang eines zweiten Rahmens bestätigt, der von einer zweiten Vorrichtung ansprechend auf die Anfrage gesendet wurde, wobei der zweite Rahmen eine Anzeige der bevorzugten Senderichtung aufweist, die von der zweiten Vorrichtung basierend auf der Vielzahl von Senderichtungen bestimmt wurde, wobei die ersten und zweiten Rahmen dieselbe Mediumreservierungsinformation zum Reservieren des Mediums aufweisen; und
Unterlassen (606) des Sendens über das Medium in der bestimmten Richtung basierend auf der Mediumreservierungsinformation.

10. Verfahren (600) nach Anspruch 9, wobei:
die Mediumreservierungsinformation eine Anzeige einer Zeitdauer aufweist, für die das Medium der ersten Vorrichtung erteilt bzw. zugeteilt ist, und wobei das Verfahren weiter Folgendes aufweist:
Unterlassen des Zugreifens auf das reservierte Medium für die Zeitdauer.

11. Verfahren (600) nach Anspruch 10, wobei sich die Zeitdauer, die in der Mediumreservierungsinformation angezeigt ist, von der anderen Zeitdauer, die in der Anfrage angezeigt ist, unterscheidet.

12. Verfahren (600) nach Anspruch 9, wobei:
die Mediumreservierungsinformation eine Anzeige über Frequenzen des Mediums aufweist, die von der ersten Vorrichtung verwendet werden sollen, und wobei das Verfahren weiter Folgendes aufweist:
Unterlassen des Sendens bzw. Übertragens unter Verwendung der Frequenzen aus der Mediumreservierungsinformation.

13. Verfahren (600) nach Anspruch 9, das weiter Folgendes aufweist:
Einstellen, an einer Vorrichtung, eines Wertes eines Netzwerkzuteilungsvektor-Zählers bzw. NAV-Zählers (NAV = Network Allocation Vector) gemäß der Mediumreservierungsinformation, wobei
der Wert des NAV-Zählers eine Anzahl von Zeiteinheiten aufweist, für die die Vorrichtung das Zugreifen auf das Medium unterlässt.

14. Eine Vorrichtung (600A) für Drahtloskommunikationen, die Folgendes aufweist:
Mittel (602A) zum Detektieren einer Anfrage (706) ein Medium zu verwenden, die von einer ersten Vorrichtung in einer Vielzahl von Senderichtungen gesendet bzw. übertragen wird;
Mittel (604A) zum Detektieren eines ersten Rahmens (708), der von der ersten Vorrichtung gesendet wird, und einer bevorzugten Senderichtung, in die der erste Rahmen gesendet wurde, wobei der Rahmen den Empfang eines zweiten Rahmens (710) bestätigt, der von einer zweiten Vorrichtung ansprechend auf die Anfrage gesendet wurde, wobei der zweite Rahmen eine Anzeige der bevorzugten Senderichtung aufweist, die von der zweiten Vorrichtung basierend auf der Vielzahl von Senderichtungen bestimmt wird, wobei der ersten und zweiten Rahmen dieselbe Mediumreservierungsinformation zum Reservieren des Mediums aufweisen; und
Mittel (606A) zum Unterlassen des Sendens bzw. Übertragens über das Medium in der bestimmten Richtung basierend auf der Mediumreservierungsinformation und der detektierten bevorzugten Richtung.

15. Ein Computerprogrammprodukt für Drahtloskommunikationen, das ein computerlesbares Medium aufweist, das Instruktionen aufweist, die ausgeführt werden können, um die Schritte nach einem der Ansprüche 1 bis 7 oder 9 bis 13 auszuführen.

## Revendications

1. Procédé (500) pour des communications sans fil, comprenant :
émettre (502) une requête (706) pour utiliser un support ;
recevoir (504) une première trame (708) émise en réponse à la requête, la première trame comprenant des informations de réservation de support ; et
émettre (506) une deuxième trame (710) comprenant les mêmes des informations de réservation de support que la première trame,
dans lequel la requête est émise dans une pluralité de directions d'émission, et la première trame comprend en outre une indication d'une direction d'émission préférée déterminée sur la base de la pluralité de directions d'émission, la deuxième trame étant émise dans la direction d'émission préférée.

2. Procédé (500) selon la revendication 1, comprenant en outre :
décoder la première trame pour déterminer les informations de réservation de support.

3. Procédé (500) selon la revendication 1, dans lequel la requête comprend au moins une indication de chaque direction d'émission de la pluralité de directions d'émission dans lesquelles la requête est émise.

4. Procédé (500) selon la revendication 1, dans lequel :
la première trame a été émise dans une pluralité de directions d'émission ; et
la deuxième trame comprend une indication d'une direction d'émission préférée sur la base de la pluralité de directions d'émission.

5. Procédé (500) selon la revendication 1, comprenant en outre :
recevoir la première trame en utilisant une pluralité de directions de réception ; et
déterminer une direction de réception préférée sur la base de la pluralité de directions de réception.

6. Procédé (500) selon la revendication 1, dans lequel :
la requête comprend une indication d'une première durée pour laquelle il est demandé d'utiliser le support ; et
les informations de réservation de support comprennent une indication d'une deuxième durée pour laquelle le support est accordé.

7. Procédé (500) la revendication 1, dans lequel :
les informations de réservation de support indiquent au moins l'un des éléments suivants : des fréquences du support à utiliser pour les transmissions, un ou plusieurs segments temporels d'une trame de données autorisés pour les transmissions, ou si la réservation du support est périodique.

8. Dispositif (500A) pour des communications sans fil, comprenant :
des moyens (502A) pour émettre une requête (706) pour utiliser un support ;
des moyens (504A) pour recevoir une première trame (708) émise en réponse à la requête, la première trame comprenant des informations de réservation de support ; et
des moyens (506A) pour émettre une deuxième trame (710) comprenant les mêmes informations de réservation de support que la première trame,
dans lequel la requête est émise dans une pluralité de directions d'émission, et la première trame comprend en outre une indication d'une direction d'émission préférée déterminée sur la base de la pluralité de directions d'émission, la deuxième trame étant émise dans la direction d'émission préférée.

9. Procédé (600) pour des communications sans fil, comprenant :
détecter (602) une requête pour utiliser un support, émise par un premier dispositif dans une pluralité de directions d'émission ;
détecter (604) une première trame émise par le premier dispositif et une direction préférée suivant laquelle la première trame a été émise, la première trame confirmant la réception d'une deuxième trame émise par un deuxième dispositif en réponse à la requête, la deuxième trame comprenant une indication de la direction d'émission préférée déterminée par le deuxième dispositif sur la base de la pluralité de directions d'émission, les première et deuxième trames comprenant les mêmes informations de réservation de support pour réserver le support ; et
s'abstenir (606) d'émettre sur le support dans la direction déterminée sur la base des informations de réservation de support.

10. Procédé (600) selon la revendication 9, dans lequel :
les informations de réservation de support comprennent une indication d'une durée pour laquelle le support est accordé au premier dispositif, et le procédé comprenant en outre :
s'abstenir d'accéder au support réservé pendant ladite durée.

11. Procédé (600) selon la revendication 10, dans lequel la durée indiquée dans les informations de réservation de support est différente d'une autre durée indiquée dans la requête.

12. Procédé (600) selon la revendication 9, dans lequel :
les informations de réservation de support comprennent une indication concernant des fréquences du support à utiliser par le premier dispositif, et le procédé comprenant en outre :
s'abstenir d'émettre en utilisant les fréquences des informations de réservation de support.

13. Procédé (600) selon la revendication 9, comprenant en outre :
régler, au niveau d'un dispositif, une valeur de compteur de Vecteur d'Allocation de Réseau (NAV) conformément aux informations de réservation de support, dans lequel
la valeur du compteur NAV comprend un nombre d'unités de temps pendant lequel le dispositif s'abstient d'accéder au support.

14. Dispositif (600A) pour des communications sans fil, comprenant :
des moyens (602A) pour détecter une requête (706A) pour utiliser un support, émise par un premier dispositif dans une pluralité de directions d'émission ;
des moyens (604A) pour détecter une première trame (708) émise par le premier dispositif et une direction préférée suivant laquelle la première trame a été émise, la première trame confirmant la réception d'une deuxième trame (710) émise par un deuxième dispositif en réponse à la requête, la deuxième trame comprenant une indication de la direction d'émission préférée déterminée par le deuxième dispositif sur la base de la pluralité de directions d'émission, les première et deuxième trames comprenant les mêmes informations de réservation de support pour réserver le support ; et
des moyens (606A) pour s'abstenir d'émettre sur le support dans la direction déterminée sur la base des informations de réservation de support et de la direction préférée détectée.

15. Produit programme d'ordinateur pour des communications sans fil, comprenant un support lisible par un ordinateur comprenant des instructions exécutables pour réaliser les étapes de l'une quelconque des revendications 1 à 7 ou 9 à 13.
